# EUROPEAN PATENT SPECIFICATION

(11) **EP 2 375 807 B1**
(45) Date of publication and mention of the grant of the patent: **31.10.2018**
(21) Application number: 09831442.0
(22) Date of filing: 30.11.2009
(51) Int. Cl.: H04W 36/00, H04W 28/26, H04W 36/04, H04W 36/32, H04W 48/16, H04W 84/04, H04W 88/16, H04W 92/24, H04W 76/10

(54) **HANDOVER PROCESSING METHOD, HOME BASE STATION GATEWAY AND NETWORK SYSTEM**
WEITERGABEVERARBEITUNGSVERFAHREN, HEIMBASISSTATIONSGATEWAY UND NETZWERKSYSTEM
PROCÉDÉ DE TRAITEMENT DE TRANSFERT, PASSERELLE POUR STATION DE BASE LOCALE ET SYSTÈME DE RÉSEAU

(30) Priority: 10.12.2008 CN 200810204571; 28.09.2009 CN 200910177421
(43) Date of publication of application: 12.10.2011
(73) Proprietor: Huawei Technologies Co., Ltd., Longgang District Shenzhen, Guangdong 518129 (CN)
(72) Inventor: CHEN, Xin, Guangdong 518129 (CN); DENG, Mingyi, Guangdong 518129 (CN); TIAN, Xu, Guangdong 518129 (CN)
(74) Representative: Isarpatent
(86) International application number: PCT/CN2009/075215
(87) International publication number: WO 2010/066165

(56) References cited:
- WO-A1-2007/010304
- WO-A1-2008/088592
- WO-A1-2008/103084
- WO-A2-2008/055251
- CN-A- 101 123 577
- CN-A- 101 466 125
- US-A1- 2005 148 368
- US-A1- 2008 132 239

## Description

### FIELD OF THE INVENTION

The present invention relates to the field of communication technologies, and in particular, to a handover processing method, an access gateway (AG), and a network system.

### BACKGROUND OF THE INVENTION

A major issue on a communication network is how to enhance the network coverage while guaranteeing the network capacity and quality. Therefore, various base stations such as macro base stations, microcell base stations, and distributed base stations are developed. To solve the problem of poor indoor coverage, a Femtocell is developed. The Femtocell is also known as a home NodeB (for ease of description, referred to as Femtocell hereinafter), featuring small size, low power, and plug and play.

In a scenario where a Femtocell is used, a macro cell exists outdoors on the macro network of the 3rd Generation (3G) communication system, and a Femtocell network exists indoors. In actual network connection configurations, the macro cell system includes standard network elements, that is, includes a mobile switching center (MSC), a radio network controller (RNC), a NodeB, and user equipment (UE). The Femtocell network system includes an AG, a Femtocell, and a UE. The AG may be regarded as the agent of the RNC, and is connected to the MSC of the macro cell. The Femtocell may be regarded as the equivalent to the RNC and the NodeB, and includes the functions of the RNC and the NodeB, but currently does not have an Iur interface.

In a scenario where the Femtocell is used, the consistency of services needs to be uniformly considered and mobility management needs to be provided for the UE to
implement bidirectional handovers between the macro cell and the Femtocell. When the UE needs to hand over from the Femtocell to the macro cell, because the Femtocell already has the function of a receiver, the Femtocell can automatically configure the neighbor macro cell. Therefore, this handover process is already implemented in the prior art. The pending problem is how to implement the handover from the macro cell to the Femtocell. The handover of the UE from the macro cell to the Femtocell may be regarded as a handover between different RNCs.

In the prior art, the UE is unable to hand over from the macro cell to the Femtocell.

WO 2008/055251 A2 relates to a method of identifying a list of Femtocell Access Points (FAPs) for a user equipment (UE) communication session in a communication system including a first communication system and a second wireless communication system.

WO 2007/010304 A1 relates to a cellular radio telecommunication handover system and method for enabling the handover of a mobile telecommunications device between a licensed (cellular) network and an unlicensed mobile network comprising a plurality of low power access points having all of them the same common cell identity (GGI).

US 2005/148368 A1 relates to a radio base station in a mobile communication network for collecting information about the network and exchanges data with a configuration device, the Internet System Manager (iSM).

### SUMMARY OF THE INVENTION

Embodiments of the present invention provide a handover processing method, an AG and a network system so that a UE can hand over from a macro cell to a Femtocell, as defined in the independent claims.

The embodiments and/or examples of the following description which are not covered by the appended claims are considered as not being part of the present invention.

According to one aspect, a handover processing method is provided, where the method includes:
by an AG, receiving a Relocation Request message sent from an MSC, where the Relocation Request message indicates that a UE hands over to a Femtocell, wherein the Relocation Request message comprises an offset between a system frame number, SFN, of a target Femtocell and an SFN of a source macro cell in which the UE is located;
screening candidate target Femtocells, and instructing the screened candidate target Femtocells to activate reserved handover resources, where the candidate target Femtocells include the target Femtocell, wherein the screening comprises: searching pre-stored SFN offsets which are between a plurality of Femtocell equipments and neighbor macro cells of the plurality of Femtocell equipments for an SFN offset that matches the offset carried in the Relocation Request message, and determining a Femtocell equipment corresponding to the matched SFN offset as one of the candidate target Femtocells according to a mapping relation between the pre-stored SFN offsets and identities of the plurality of Femtocell equipments, Femtocell EIs; and
after the target Femtocell included in the screened candidate target Femtocells establishes a connection with the UE by using the reserved handover resources, receiving a Relocation Complete message returned from the target Femtocell that establishes a connection with the UE;
the Relocation Request message further carries an identity, ID, of a source macro cell in which the UE is located and a cell ID of the target Femtocell, wherein: the process of screening candidate target Femtocells by the AG further comprises:
   determining a Femtocell equipment, which corresponds to the source macro cell ID, the matched SFN offset and the cell ID of the target Femtocell as one of the candidate target Femtocells according to a mapping relation of the Femtocell EIs, the neighbor macro cell IDs, Femtocell cell identities, Femtocell_cell_IDs, and the pre-stored SFN offsets;
   after receiving the Relocation Complete message returned from the target Femtocell that establishes the connection with the UE, the method further comprises: instructing others of the candidate target Femtocells that do not establish a connection with the UE to release a connection with the AG; or, releasing, by others of the candidate target Femtocells that do not establish a connection with the UE, a connection with the AG after a set time expires,
   wherein the pre-stored SFN offsets are obtained by one of the following manners:
      the pre-stored SFN offsets are reported to the AG from a Femtocell after an SFN of each neighbor macro cell is measured and SFN Offsets between the SFN of the Femtocell and the SFNs of the neighbor macro cells are calculated by the Femtocell, or calculated by the AG after receiving the SFN of each neighbor macro cell and the SFN of the Femtocell from the Femtocell; or
      the pre-stored SFN offsets are calculated by the AG when different SFN time start points are configured for each Femtocell covered in a macro cell.

According to another aspect, an AG is provided, where the AG includes:
a receiving unit, configured to receive a Relocation Request message sent from an MSC, where the Relocation Request message indicates that a UE hands over to a Femtocell, wherein, the Relocation Request message received by the receiving unit comprises an offset which is between a system frame number, SFN, of a target Femtocell and an SFN of a source macro cell in which the UE is located;
a storage unit, configured to store a mapping relation between SFN offsets and identities of a plurality of Femtocell equipments, Femtocell EIs, wherein the SFN offsets are between the plurality of Femtocell equipments and neighbor macro cells of the plurality of Femtocell equipments;
a processing unit, configured to: after the receiving unit receives the Relocation Request message, screen candidate target Femtocells, and instruct the screened candidate target Femtocells to activate reserved handover resources, where the candidate target Femtocells include the target Femtocell, wherein the processing unit is further configured to search the SFN offsets which are between the plurality of Femtocell equipments and the neighbor macro cells and are stored in the storage unit for an SFN offset that matches the offset carried in the Relocation Request message, and determine a Femtocell equipment corresponding to the matched SFN offset as one of the candidate target Femtocells according to the mapping relation between the SFN offsets and the Femtocell EIs; and
a completing unit, configured to: after the target Femtocell included in the screened candidate target Femtocells establishes a connection with the UE by using the reserved handover resources, receive a Relocation Complete message returned from the target Femtocell that establishes a connection with the UE;
the Relocation Request message received by the receiving unit further carries an identity, ID, of a source macro cell in which the UE is located and a cell ID of the target Femtocell;
the storage unit is configured to store a mapping relation of the Femtocell EIs, identities of the neighbor macro cells, neighbor macro cell IDs, Femtocell cell identities, Femtocell_cell_IDs, and the SFN offsets; and
the processing unit is configured to: search the SFN offsets for an SFN offset that matches the offset carried in the Relocation Request message, and determine a Femtocell equipment, which corresponds to the source macro cell ID, the matched SFN offset and the cell ID of the target Femtocell as one of the candidate target Femtocells according to the mapping relation of the Femtocell EIs, the neighbor macro cell IDs, the Femtocell_cell_IDs, and the SFN offsets;
a releasing unit, configured to: after the completing unit receives the Relocation Complete message returned from the target Femtocell that establishes the connection with the UE, instruct others of the candidate target Femtocells that do not establish a connection with the UE to release a connection with the AG,
wherein the pre-stored SFN offsets are obtained by one of the following manners:
   the pre-stored SFN offsets are reported to the AG from a Femtocell after an SFN of each neighbor macro cell is measured and SFN Offsets between the SFN of the Femtocell and the SFNs of the neighbor macro cells are calculated by the Femtocell, or calculated by the AG after receiving the SFN of each neighbor macro cell and the SFN of the Femtocell from the Femtocell; or
   the pre-stored SFN offsets are calculated by the AG when different SFN time start points are configured for each Femtocell covered in a macro cell.

According to still another aspect, a network system is provided, where the network system includes: an MSC, configured to send a Relocation Request message that indicates a UE hands over to a Femtocell;
an AG according to the above AG; and
multiple Femtocells, acting as the candidate target Femtocells, configured to activate the reserved handover resources according to the instruction from the AG, wherein one of the multiple Femtocells, acting as the target Femtocell, is configured to establish a connection with the UE by using the reserved handover resources, and to send a Relocation Complete message to the AG.

According to the foregoing technical solution, the AG screens candidate target Femtocells from all the Femtocells on a Femtocell network, so that the scope of the target Femtocells is greatly narrowed. In addition, the handover resources reserved by the screened candidate target Femtocells are activated, so that these resources may be used for the connection with the UE; one target Femtocell of the preliminarily screened candidate target Femtocells meets the handover condition of the UE. In this way, the target Femtocell can establish a connection with the UE by using the reserved handover resources, so that the UE can hand over from a macro cell to a Femtocell.

### BRIEF DESCRIPTION OF THE DRAWINGS

FIG. 1 is a flowchart of a handover processing method according to an embodiment of the present invention;
FIG. 2 is a flowchart of a handover processing method according to another embodiment of the present invention;
FIG. 3 is a flowchart of a handover processing method according to still another embodiment of the present invention;
FIG. 4 is a schematic structural diagram of an AG according to an embodiment of the present invention; and
FIG. 5 is a schematic structural diagram of a network system according to an embodiment of the present invention.

### DETAILED DESCRIPTION OF THE EMBODIMENTS

The technical solution of the present invention is hereinafter described in detail with reference to the accompanying drawings. It is evident that the described embodiments are only part of rather than all of the embodiments of the present invention. All other embodiments that those of ordinary skill in the art obtain based on the embodiments of the present invention without creative efforts shall fall within the protection scope of the present invention.

An embodiment of the present invention provides a handover processing method to enable the UE to hand over from a macro cell to a Femtocell.

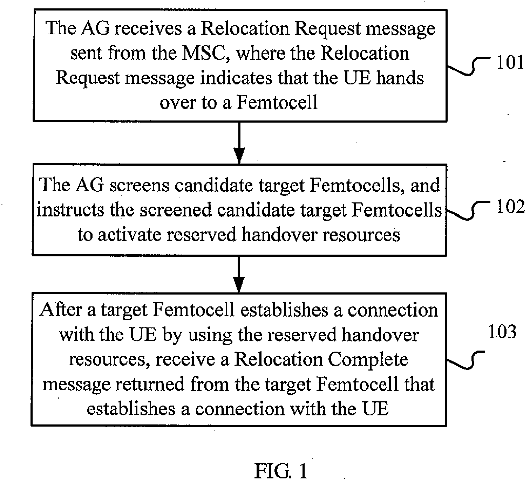

FIG. 1 is a flowchart of a handover processing method according to an embodiment of the present invention. As shown in FIG. 1, the method includes the following steps:
Step 101: The AG receives a Relocation Request message sent from a mobile switching center (MSC), where the Relocation Request message indicates that a user equipment (UE) hands over to a Femtocell.

The Relocation Request message sent from the MSC carries a Femtocell cell identity (Femtocell_cell_ID) and a macro cell identity (ID).

Step 102: The AG screens candidate target Femtocells, and instructs the screened candidate target Femtocells to activate reserved handover resources.

When the AG screens candidate target Femtocells, it selects candidate target Femtocells according to a preset mapping relation of the Femtocell_cell_ID, the scramble code, the Femtocell equipment ID (EI), and the macro cell ID, where the candidate target Femtocell is at least one of all target Femtocells.

Step 103: After a target Femtocell of the screened candidate target Femtocells establishes a connection with the UE by using the reserved handover resources, the AG receives a Relocation Complete message returned from the target Femtocell that establishes a connection with the UE.

Specifically, this step includes:
After instructing the screened candidate target Femtocells to activate the reserved handover resources, the AG receives parameter information regarding physical channel reconfiguration returned from the screened candidate target Femtocells, and sends the parameter information to the original access network that initiates the handover through the core network; and
the AG receives a Relocation Complete message returned from the target Femtocell that establishes a connection with the UE, where the target Femtocell that establishes a connection with the UE is the sole Femtocell that receives a Physical Channel Reconfiguration Complete message, where the Physical Channel Reconfiguration Complete message is sent by the UE to the screened candidate target Femtocells after the UE performs the physical channel reconfiguration according to the Physical Channel Reconfiguration message sent from the original access network, where the Relocation Complete message is sent by the sole Femtocell, that receives the Physical Channel Reconfiguration Complete message, to the AG after the sole Femtocell establishes a connection with the UE by re-sending a Physical Channel Reconfiguration message to the UE to instruct the UE to re-perform the physical channel reconfiguration.

In this embodiment, the AG screens candidate target Femtocells from all the Femtocells on a Femtocell network, so that the scope of target Femtocells are greatly narrowed. In addition, the handover resources reserved by the screened candidate target Femtocells are activated, so that these resources may be used for the connection with the UE; one target Femtocell of the preliminarily screened candidate target Femtocells meets the handover condition of the UE. In this way, the target Femtocell can establish a connection with the UE by using the reserved handover resources, so that the UE can hand over from a macro cell to a Femtocell.

The following describes the technical solution provided in the embodiments of the present invention in more detail.

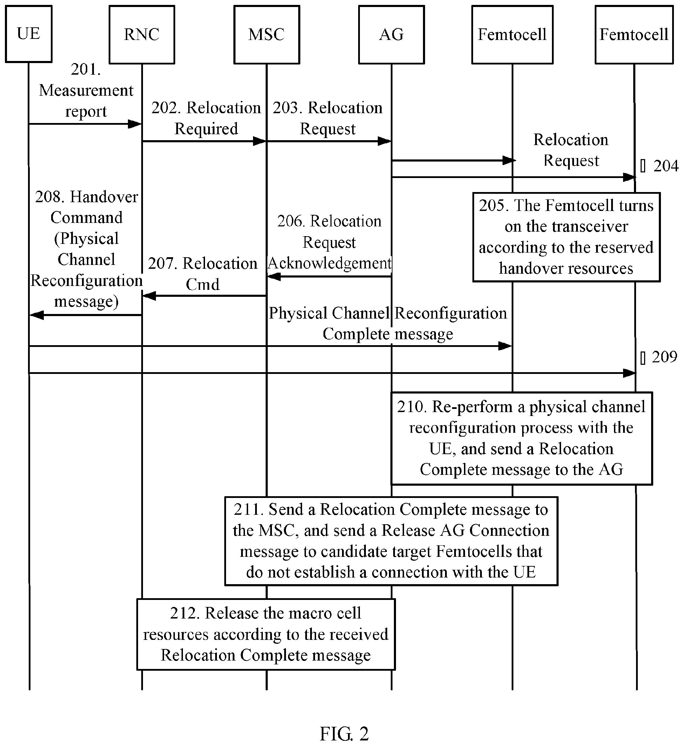

FIG. 2 is a flowchart of the handover processing method according to another embodiment of the present invention.

The application network architecture in this embodiment includes an RNC and an MSC that are in a macro cell, and an AG and a Femtocell that are on a Femtocell network. Each network element (NE) on the macro network is connected in a standard way. In the macro cell, the Femtocell is configured as a neighbor cell by using the method provided in this embodiment. On the AG, target Femtocells are selected according to a set algorithm, and handover resources are reserved on the Femtocell. As shown in FIG. 2, the method includes the following steps:
Step 201: The UE in the macro cell triggers a handover event, and sends a measurement report to the RNC.

When the UE in the macro cell triggers a handover event, for example, a 2D event of inter-frequency handover, the UE sends a measurement report that includes scramble codes of Femtocells to the RNC, requesting to hand over to a Femtocell that is a neighbor cell.

Before the UE in the macro cell triggers a handover event, the Femtocells have already pre-configured as neighbor cells on the RNC in the macro cell. The process of configuring the Femtocells as neighbor cells on the RNC in the macro cell includes:
In the macro cell, the Femtocell needs to be configured as a neighbor cell. Because a large number of (generally, more than 32) Femtocells are available, a new method is adopted in this embodiment of the present invention to solve the problem of configuring the Femtocells as neighbor cells. The method includes the following steps:
(1) Specify that each Femtocell uses a limited number of (for example, generally no more than 10) scramble codes which may be determined through negotiation with operators, and that the scramble codes used by each Femtocell are different from those used by the macro cell.
(2) Determine that each scramble code corresponds to a Femtocell_cell_ID.
(3) Uniformly configure Femtocells as neighbor cells according to the determined Femtocell_cell_ID in all the macro cells, that is, the configurations are the same in the cells with same frequency and cells with different frequencies in the macro cell. Table 1 lists the mapping relation between the Femtocell_cell_ID and the scramble code. As an example, the number of scramble codes is seven, and is not limited in this embodiment.

**Table 1 Mapping relation between the Femtocell_cell_ID and the scramble code that are in the macro cell**

| **Femtocell_ cell_ID** | **Scramble Code (SC)** |
|---|---|
| Femtocell cell 1 | Sc 1 |
| Femtocell cell 2 | Sc 2 |
| Femtocell cell 3 | Sc 3 |
| ... | |
| Femtocell cell 7 | Sc 7 |

Step 202: The RNC confirms that the handover destination is a Femtocell according to the content of the measurement report, and sends a Relocation Required message to the MSC, where the Relocation Required message indicates the target cell is a Femtocell.

Step 203: The MSC judges that the target cell is a Femtocell, and sends a Relocation Request message to the AG.

The MSC judges that the target cell to which the UE hands over is a Femtocell according to the received Relocation Required message, and sends a Relocation Request message to the AG, where the Relocation Request message carries an UE international mobile subscriber identity (IMSI), a macro cell ID, and a Femtocell_cell_ID.

Step 204: The AG screens candidate target Femtocells according to a set algorithm, and forwards a Relocation Request message to the screened candidate target Femtocells.

After receiving the Relocation Request message, the AG screens candidate target Femtocells according to a set algorithm, and thus obtains the target Femtocells within the minimum scope.

To select a target Femtocell on the AG, a database used to search for a target Femtocell may be set up on the AG. In the database, multiple association information lists are set up, including the following information:
Femtocell_cell_ID: a Femtocell cell identity, which is the same as the Femtocell_cell_ID configured in the macro cell.

SC: Scramble codes used by each Femtocell.

N_cell_ID: Macro cell ID automatically configured by each Femtocell.

Femtocell EI: Femtocell equipment identity (ID) that is configured to uniquely determine the physical device of the Femtocell.

IMSI: International mobile subscriber identity that is configured to uniquely identify the UE.

The following describes related lists in the database.
Table 2 is a mapping table between the Femtocell_cell_ID and the scramble code that are configured on the AG. According to the mapping relation between Femtocell_cell_ID and the scramble code set up in Table 2, if a Femtocell_cell_ID is provided, the corresponding scramble code may be found.

**Table 2**

| **Femtocell_ cell_ID** | **SC** |
|---|---|
| Femtocell cell 1 | Sc 1 |
| Femtocell cell 2 | Sc 2 |
| Femtocell cell 3 | Sc 3 |
| ... | |
| Femtocell cell 7 | Sc 7 |

Table 3 is an allocation table between the Femtocell EI and scramble codes. In table 3, each scramble code corresponds to some Femtocells in use. If a scramble code is provided, the corresponding Femtocells may be found.

**Table 3**

| **SC** | **Femtocell EI** |
|---|---|
| SC1 | Femtocell EI 1 |
| | Femtocell EI n |
| | .... |
| | Femtocell EI m |
| SC 2 | Femtocell EI S |
| | ... |

Table 4 is a neighbor cell configuration table of a Femtocell. In table 4, each Femtocell has a neighbor cell list of macro cells. When each Femtocell is automatically designed, a neighbor cell (macro cell) is always detected and generated automatically. If an N_CELL_ID is provided, the corresponding Femtocell may be found.

**Table 4**

| **Femtocell EI** | **N_CELL_ID** |
|---|---|
| Femtocell EI 1 | Cell 1 |
| | Cell n |
| | .... |
| Femtocell EI 2 | Cell n |
| | Cell n+1 |
| | ... |

Table 5 is a list of the Femtocell modes. Table 5 records the modes (open mode or closed mode) of each Femtocell. When a selected Femtocell works in closed mode, the access list needs to be verified.

**Table 5**

| **Femtocell_EI** | **Mode** |
|---|---|
| Femtocell EI 1 | Open or Closed |
| Femtocell EI 2 | Open or Closed |
| ... | .... |
| Femtocell EI N | Open or Closed |

Table 6 is an access list. Each Femtocell has an access list. If a Femtocell works in closed mode, only the UEs in the access list are allowed to hand over to the Femtocell.

**Table 6**

| **Femtocell EI** | **IMSI** |
|---|---|
| Femtocell EI 1 | IMSI 1 |
| | IMSI 2 |
| | .... |
| | IMSI n |
| Femtocell EI 2 | IMSI 1 |

The AG receives a Relocation Request message that carries a UE IMSI, a macro cell ID, and a Femtocell_cell_ID. The AG searches the database to find a target Femtocell quickly according to these parameters. The specific process includes the following:
The AG searches Table 2 (the mapping table between the Femtocell_cell_ID and the scramble code), and obtains an SC of the Femtocell according to the Femtocell_cell_ID; the AG searches Table 3 (the allocation table between the Femtocell EI and scramble codes) according to the SC, and obtains a group of corresponding Femtocells; and then the AG searches Table 4 (the neighbor cell configuration table of the Femtocell), screens corresponding Femtocells from the Femtocells obtained in searching table 3 according to the N_CELL_ID, and obtains candidate target Femtocells within minimum scope.

It should be noted that if the AG further searches Table 5 (the list of the Femtocell modes) and finds that some screened candidate target Femtocells work in closed mode, the AG needs to further search Table 6 (the access list), and further narrow the scope of target Femtocells according to the UEs that are allowed to access.

After the AG, according to the preceding algorithm, searches the database and determines the target Femtocells within a smaller scope, the AG forwards a Relocation Request message to the screened candidate target Femtocells.

Step 205: The screened candidate target Femtocells turn on the transceiver according to the reserved handover resources.

The target Femtocells that receive the Relocation Request message establish a connection with the AG, activate the reserved handover resources according to the Relocation Request message sent from the AG, internally complete the setup of radio links and uplink/downlink synchronization according to the reserved handover resources, turn on the transceiver, and then send a Relocation Request Acknowledge to the AG.

Multiple target Femtocells are required to prepare resources to guarantee that one target Femtocell among these Femtocells can establish a connection with the UE, and generally, all the Femtocells have reserved handover resources, and therefore, in the embodiment of the present invention, a Relocation Request message is sent to instruct the screened candidate target Femtocells to activate the reserved handover resources (resources needed for establishing a radio link). These resources include information needed by the Physical Channel Reconfiguration message, for example, frequency point and time sequence, where the information is encapsulated in the Relocation Request Acknowledge message.

It should be noted that, to reduce the overheads of the reserved resources, resources needed by an adaptive multi-rate (AMR) service and a video phone (VP) service in a circuit switched (CS) domain may be reserved, without reserving resources for services in a packet switched (PS) domain.

After receiving the Relocation Request Acknowledge returned from the Femtocells, the AG combines the information and generates a final Relocation Request Acknowledge that is sent to the core network.

Step 206: The AG returns a Relocation Request Acknowledge to the MSC.

Step 207: The MSC sends a Relocation Cmd to the RNC.

Step 208: The RNC sends a handover command (that is, the Physical Channel Reconfiguration message) to the UE.

After receiving the Relocation Cmd, the RNC sends a Physical Channel Reconfiguration message to the UE.

Step 209: The UE performs physical channel reconfiguration according to the received Physical Channel Reconfiguration message, establishes synchronization with the candidate target Femtocells, and sends a Physical Channel Reconfiguration Complete message to the candidate target Femtocells.

After performing the physical channel reconfiguration, the UE sends a Physical Channel Reconfiguration Complete message to the screened candidate target Femtocells.

Step 210: A Femtocell that receives the Physical Channel Reconfiguration Complete message re-performs a physical channel reconfiguration process with the UE, and sends a Relocation Complete message to the AG.

Only the channel configuration of one Femtocell meets the condition of establishing a connection with the UE, and only this Femtocell can receive the Physical Channel Reconfiguration Complete message from the UE. Therefore, the Femtocell, which receives the Physical Channel Reconfiguration Complete message, of the screened candidate target Femtocells re-sends a Physical Channel Reconfiguration message to the UE, that is, re-performs a physical channel reconfiguration process to instruct the UE to release occupied reserved physical channel resources. However, the Femtocell is also the target Femtocell to which the UE actually hands over, and the physical channel resources used by the Femtocell are the current available physical channel resources. Therefore, through this interaction process, the sole target Femtocell is determined, and the sole target Femtocell establishes a connection with the UE.

After receiving the Physical Channel Reconfiguration Complete message returned from the UE again, the sole target Femtocell sends a Relocation Complete message to the AG.

Step 211: The AG learns the sole target Femtocell according to the received Relocation Complete message, and sends a Relocation Complete message to the MSC and a Release AG Connection message to the candidate target Femtocells that do not establish a connection with the UE.

It should be noted that the AG may not send a Release AG Connection message (equivalent to the process of releasing reserved handover resources) to the target Femtocells that do not establish a connection with the UE. Instead, these candidate target Femtocells release the connection with the AG automatically if not receiving a Physical Channel Reconfiguration Complete message after a set time expires.

Step 212: The MSC releases the macro cell resources according to the received Relocation Complete message.

The MSC sends an Iu Release message to the RNC, and the RNC returns an Iu Release Complete message to the MSC. The whole handover process ends.

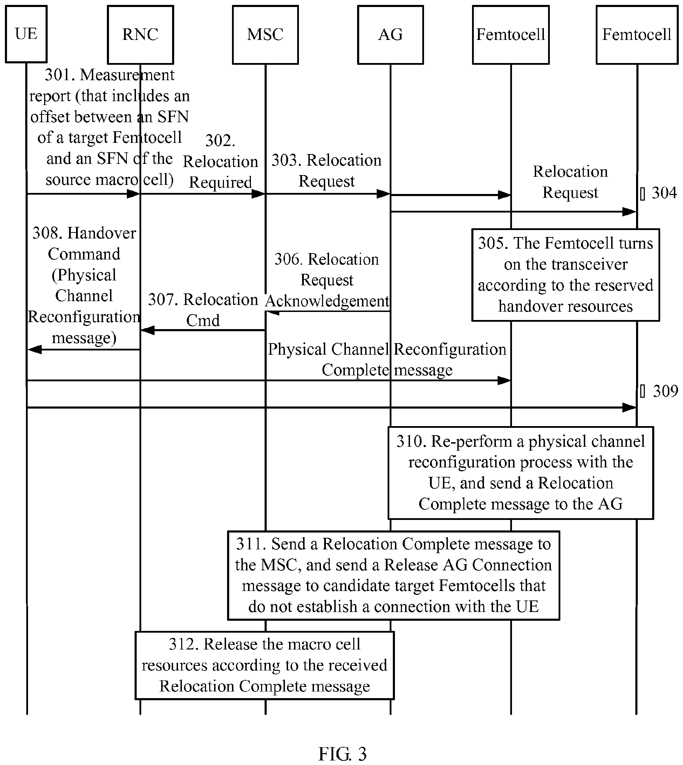

FIG. 3 is a flowchart of the handover processing method according to still another embodiment of the present invention.

Step 301: The UE in the macro cell triggers a handover event, and sends a measurement report to the RNC, where the measurement report includes an offset between a system frame number (SFN) of a target Femtocell that acts as a handover target and an SFN of a source macro cell where the UE is located, where the target Femtocell that acts as a handover target is one of candidate Femtocells to be screened out.

Step 302: The RNC confirms that the handover target is a Femtocell according to the content of the measurement report, and sends a Relocation Required message to the MSC, where the message includes an offset between the SFN of the Femtocell that acts as a handover target and the SFN of the source macro cell.

Step 303: The MSC judges that the target cell is a Femtocell, and sends a Relocation Request message to the AG.

The MSC judges that the target cell to which the UE hands over is a Femtocell according to the received Relocation Required message, and sends a Relocation Request message to the AG, where the message includes an offset between the SFN of the Femtocell that acts as a handover target and the SFN of the source macro cell.

Step 304: The AG screens candidate target Femtocells, and forwards the Relocation Request message to the screened candidate target Femtocells.

To select a target Femtocell on the AG, an information list used to search for a target Femtocell may be set up on the AG. The information list includes the following information:
Femtocell EI: Femtocell equipment ID that is configured to uniquely determine the physical device of the Femtocell.

Femtocell SFN_offset: SFN_offset of a Femtocell, indicating an offset which is between an SFN of the Femtocell and an SFN of a neighbor macro cell, where the neighbor macro cell refers to a neighbor cell of the Femtocell.

The association information list is shown in Table 7.

**Table 7**

| **Femtocell EI** | **Femtocell SFN_offset** |
|---|---|
| Femtocell EI 1 | SFN_offset 1 |
| | SFN_offset 2 |
| | SFN_offset 3 |
| Femtocell EI 2 | SFN_offset 4 |
| | SFN_offset 5 |
| | SFN_offset 6 |

The preceding association information list may be set up by using the following methods.

One method is as follows: One Femtocell has multiple neighbor macro cells. When the Femtocell or the macro cell is initiated, is reset or undergoes parameter reconfiguration, the Femtocell measures the SFN of each neighbor macro cell, calculates the SFN_Offsets of the Femtocell, where the SFN_Offsets of the Femtocell refer to the offsets which are between the SFN of the Femtocell and the SFNs of the neighbor macro cells, and reports the calculation result to the AG. Because one Femtocell has multiple neighbor macro cells, the Femtocell may report a group of SFN_Offsets to the AG; or
after measuring the SFN of each neighbor macro cell, the Femtocell reports the SFN of each neighbor macro cell and the SFN of the Femtocell to the AG; the AG calculates the SFN_Offsets of the Femtocell. The SFN_Offsets of the Femtocell refer to the offsets between the SFN of the Femtocell and the SFN of each neighbor macro cell. Because one Femtocell has multiple neighbor macro cells, the AG obtains a group of SFN_Offsets of the Femtocell through calculation.

Another method is as follows: Different SFN time start points are configured for each Femtocell covered in a macro cell, and the SFN_Offsets of the Femtocell are calculated. The SFN_Offsets of the Femtocell refer to the offsets between the SFN of the Femtocell and the SFN of each neighbor macro cell. Because each Femtocell has multiple neighbor macro cells, the AG obtains a group of SFN_Offsets for each Femtocell through calculation.

In this step, the AG screens candidate target Femtocells by using the following methods:
The AG searches Table 7 for the SFN_Offset of the Femtocell, where the SFN_Offset of the Femtocell matches the offset between the SFN of the Femtocell that acts as a handover target and the SFN of the source macro cell, and determines Femtocell equipment(s) corresponding to the matched SFN_Offset of the Femtocell as candidate target Femtocells.

In the embodiment of the present invention, the SFN_Offset of the Femtocell, where the SFN_Offset of the Femtocell matches the offset between the SFN of the Femtocell that acts as a handover target and the SFN of the source macro cell may be the SFN_Offset of the Femtocell, which has a minimum difference with the offset.

To locate a target Femtocell more accurately, another association information list may also be as shown in Table 8.

**Table 8**

| **Femtocell EI** | **N_cell_ID** | **Femtocell SFN_offset** |
|---|---|---|
| Femtocell EI 1 | Cell 1 | SFN_offset 1 |
| | Cell 2 | SFN_offset 2 |
| | Cell 3 | SFN_offset 3 |
| Femtocell EI 2 | Cell 4 | SFN_offset 4 |
| | Cell 5 | SFN_offset 5 |
| | Cell n | SFN_offset n |

In this case, the Relocation Request message received by the AG needs to include an offset between the SFN of a Femtocell that acts as a handover target and the SFN of the source macro cell and a cell ID of a source macro cell where the UE is located. The AG screens candidate target Femtocells according to the preceding information. The specific implementation process is as follows:
Search Table 8 for the SFN_Offset of the Femtocell, where the SFN_Offset of the Femtocell matches the offset between the Femtocell that acts as a handover target and the SFN of the source macro cell.

Determine the Femtocell equipment(s), which corresponds to the source macro cell ID and the matched SFN_Offset of the Femtocell, as candidate target Femtocell(s) according to a mapping relation of the Femtocell EI, the neighbor macro cell ID, and the Femtocell SFN_offset, where the Femtocell SFN_offset is an offset between an SFN of a Femtocell equipment and an SFN of a neighbor macro cell of the Femtocell equipment.

To locate a target Femtocell more accurately, another association information list may also be as shown in Table 9.

**Table 9**

| **Femtocell EI** | **N_cell_ID** | **Femtocell_cell_ID** | **Femtocell SFN_offset** |
|---|---|---|---|
| Femtocell EI 1 | Cell 1 | Femtocell cell 1 | SFN_offset 1 |
| | Cell 2 | Femtocell cell 2 | SFN_offset 2 |
| | Cell 3 | Femtocell cell 3 | SFN_offset 3 |
| Femtocell EI 2 | Cell 4 | Femtocell cell 4 | SFN_offset 4 |
| | Cell 5 | Femtocell cell 5 | SFN_offset 5 |
| | Cell n | Femtocell cell n | SFN_offset n |

In this case, the Relocation Request message received by the AG needs to include an offset between the SFN of the Femtocell that acts as a handover target and the SFN of the source macro cell, a cell ID of the source macro cell where the UE is located, and a cell ID of the Femtocell that acts as a handover target. The AG screens candidate target Femtocells according to the information. The specific implementation process is as follows:
Search Table 9 for the SFN_Offset of the Femtocell, where the SFN_Offset of the Femtocell matches the offset between the SFN of the Femtocell that acts as a handover target and the SFN of the source macro cell.

Determine Femtocell(s), that corresponds to the source macro cell ID, the matched SFN_Offset of the Femtocell, and the cell ID of the Femtocell that acts as a handover target, as candidate target Femtocell(s) according to a mapping relation of the Femtocell EI, the neighbor macro cell ID, the Femtocell_cell_ID, and the Femtocell SFN_offset, where the Femtocell SFN_offset is an offset between an SFN of a Femtocell equipment and an SFN of a neighbor macro cell of the Femtocell equipment.

Steps 305-312 are similar to steps 205-212, and are not repeatedly described here.

In the third embodiment, candidate target Femtocells are screened according to the pre-configured parameter mapping relation (as shown in Table 7, Table 8, and Table 9), so that the scope of target Femtocells are greatly narrowed. In addition, the handover resources reserved by the screened candidate target Femtocells are activated, so that these resources may be used for the connection with the UE; one target Femtocell of the preliminarily screened candidate target Femtocells meets the handover condition of the UE. In this way, the target Femtocell can establish a connection with the UE by using the reserved handover resources, so that the UE can hand over from a macro cell to a Femtocell.

It should be noted that the technology of screening candidate target Femtocells by the AG provided in the preceding embodiments of the present invention are applicable to not only a scenario where the UE hands over from a macro cell to a Femtocell but also other scenarios where candidate target Femtocells need to be screened.

In this embodiment, candidate target Femtocells are screened from all the Femtocells on a Femtocell network according to a pre-configured parameter mapping relation, so that the scope of target Femtocells is greatly narrowed. In addition, the handover resources reserved by the screened candidate target Femtocells are activated, so that these resources may be used for the connection with the UE; one target Femtocell of the preliminarily screened candidate target Femtocells meets the handover condition of the UE. In this way, the target Femtocell can establish a connection with the UE by using the reserved handover resources, so that the UE can hand over from a macro cell to a Femtocell.

Furthermore, the AG may send a Release AG Connection message to candidate target Femtocells that do not establish a connection with the UE, or candidate target Femtocells that do not establish a connection with the UE release the connection with the AG automatically if not receiving a Physical Channel Reconfiguration Complete message after a set time expires.

The preceding content describes the handover processing method in the embodiments of the present invention in detail. Accordingly, the embodiments of the present invention also provide an AG and a network system.

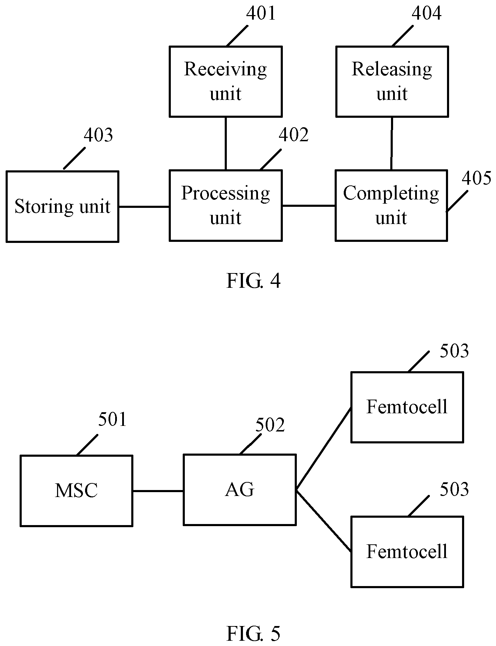

FIG. 4 is a schematic structural diagram of an AG according to an embodiment of the present invention.

As shown in FIG. 4, the AG includes:
a receiving unit 401, configured to receive a Relocation Request message sent from a mobile switching center (MSC), where the Relocation Request message indicates that a UE hands over to a Femtocell;
a processing unit 402, configured to: after the receiving unit 401 receives the Relocation Request message, screen candidate target Femtocells, and instruct the screened candidate target Femtocells to activate reserved handover resources; and
a completing unit 405, configured to: after a target Femtocell of the screened candidate target Femtocells establishes a connection with the UE by using the reserved handover resources, receive a Relocation Complete message returned from the target Femtocell that establishes a connection with the UE.

The AG further includes a storage unit 403.

The storage unit 403 is configured to store a mapping relation of the Femtocell_cell_ID, the scramble code, the Femtocell EI, and the macro cell ID. The Relocation Request message received by the receiving unit 401 carries a Femtocell_cell_ID and a macro cell ID. When the processing unit 402 screens candidate target Femtocells, the processing unit 402 selects a target Femtocell according to a mapping relation of the Femtocell_cell_ID, the scramble code, the Femtocell EI, and the macro cell ID, where the mapping relation is stored in the storage unit 403.

The process of selecting a target Femtocell by the processing unit 402 according to the mapping relation of the Femtocell_cell_ID, the scramble code, the Femtocell EI, and the macro cell ID, where the mapping relation is stored in the storage unit 403, includes:
Corresponding scramble code is determined according to the Femtocell_cell_ID, and corresponding Femtocell_cell_IDs are determined according to the determined scramble codes; a corresponding Femtocell_cell_ID is selected from the determined Femtocell_cell_IDs according to the macro cell ID, and a target Femtocell corresponding to the Femtocell_cell_ID is obtained.

After the target Femtocell corresponding to the Femtocell_cell_ID is obtained, the process further includes: if the obtained target Femtocell corresponding to the Femtocell_cell_ID works in closed mode, further screen candidate target Femtocells according to the UE that is accessible in closed mode.

Or the storage unit 403 is configured to store a mapping relation between the SFN offsets and the Femtocell EI, where the SFN offsets are between a Femtocell equipment and neighbor macro cells of the Femtocell equipment. The Relocation Request message received by the receiving unit 401 includes an offset between the SFN of a Femtocell that acts as a handover target and an SFN of the source macro cell where the UE is located. The processing unit 402 is configured to: search the SFN offsets which are between the Femtocell equipment and the neighbor macro cells and are stored in the storage unit 403 for an SFN offset that matches the offset carried in the Relocation Request message, and determine the Femtocell equipment(s) corresponding to the matched SFN offset as candidate target Femtocell(s) according to the mapping relation between the SFN offsets and the Femtocell EI, where the SFN offsets are between the Femtocell equipment and the neighbor macro cells.

In this embodiment, the SFN_Offset of the Femtocell, where the SFN_Offset of the Femtocell matches the offset between the SFN of the Femtocell that acts as a handover target, and the SFN of the source macro cell may be an SFN_Offset of the Femtocell, which has a minimum difference with the offset between the SFN of the Femtocell that acts as a handover target, and the SFN of the source macro cell.

To locate the target Femtocell more accurately, the storage unit 403 may be configured to store a mapping relation of the Femtocell EI, the neighbor macro cell ID, and the Femtocell SFN_offset, where the Femtocell SFN_offset is an SFN offset between a Femtocell equipment and a neighbor macro cell of the Femtocell equipment. In this case, the Relocation Request message received by the receiving unit 401 includes an offset between the SFN of a Femtocell that acts as a handover target and the SFN of a source macro cell where the UE is located and a cell ID of the source macro cell where the UE is located. The processing unit 402 is configured to: search the SFN offsets which are between a plurality of Femtocell equipments and the neighbor macro cells of the plurality of Femtocell equipments and are stored in the storage unit 403 for an SFN_offset that matches the offset carried in the Relocation Request message, and determine Femtocell equipment(s), which corresponds to the source macro cell ID and the matched SFN_Offset(s) of the Femtocell, as candidate target Femtocell(s) according to the mapping relation of the Femtocell EI, the neighbor cell ID, and the Femtocell SFN_offset, where the Femtocell SFN_offset is an SFN offset between a Femtocell equipment and a neighbor macro cell of the Femtocell equipment.

Or the storage unit 403 may be configured to storage a mapping relation of the Femtocell EI, the neighbor macro cell ID, the Femtocell_cell_ID, and the Femtocell SFN_offset, where the Femtocell SFN_offset is an SFN offset between a Femtocell equipment and a neighbor macro cell of the Femtocell equipment. In this case, the Relocation Request message received by the receiving unit 401 includes an offset between the SFN of a Femtocell that acts as a handover target and the SFN of a source macro cell where the UE is located, a cell ID of the source macro cell where the UE is located, and a cell ID of the Femtocell that acts as a handover target. The processing unit 402 is configured to: search the SFN offsets which are between a plurality of Femtocell equipments and neighbor macro cells of the plurality of Femtocell equipments and are stored in the storage unit 403 for an SFN offset that matches the offset carried in the Relocation Request message, and determine Femtocell equipment(s), which corresponds to the source macro cell ID, the matched SFN_Offset(s) of the Femtocell, and the cell ID of the Femtocell that acts as a handover target, as candidate target Femtocell(s) according to the mapping relation of the Femtocell EI, the neighbor cell ID, the Femtocell_cell_ID, and the Femtocell SFN_offset, where the SFN offset is between the SFN of the Femtocell equipment and the SFNs of the neighbor macro cells of the Femtocell equipment.

The AG further includes a releasing unit 404.

The releasing unit 404 is configured to: after the completing unit 405 receives a Relocation Complete message returned from a target Femtocell that establishes a connection with the UE, instruct candidate target Femtocells that do not establish a connection with the UE to release the connection with the AG.

FIG. 5 is a schematic structural diagram of a network system according to an embodiment of the present invention.

As shown in FIG. 5, the network system includes an MSC 501, an AG 502, and multiple Femtocells 503 (for example, two Femtocells are shown in FIG. 5). The structure of the AG 502 is the same as that shown in FIG. 4, and is not repeatedly described here.

The MSC 501 is configured to send a Relocation Request message indicating that the UE hands over to a Femtocell;

The AG 502 is configured to: receive a Relocation Request message sent from the MSC 501; screen candidate target Femtocells, instruct the screened candidate target Femtocells to activate reserved handover resources; after a target Femtocell of the screened candidate target Femtocells establishes a connection with the UE by using the reserved handover resources, receive a Relocation Complete message returned from the target Femtocell that establishes a connection with the UE.

Multiple Femtocells 503, acting as the candidate target Femtocells, are configured to activate the reserved handover resources according to the instruction from the AG 502, where one candidate target Femtocell establishes a connection with the UE by using the reserved handover resources, and sends a Relocation Complete message to the AG 502.

The Relocation Request message sent from the MSC 501 carries a Femtocell_cell_ID and a macro cell ID. When the AG 502 screens candidate target Femtocells, the AG selects a target Femtocell according to a preset mapping relation of the Femtocell_cell_ID, the scramble code, the Femtocell EI, and the macro cell ID.

Or the Relocation Request message sent from the MSC 501 carries an offset between the SFN of a Femtocell that acts as a handover target and the SFN of a source macro cell where the UE is located. When the AG 502 screens candidate target Femtocells, the AG searches the pre-stored Femtocell SFN_offsets which are between SFNs of a plurality of Femtocell equipments and SFNs of the neighbor macro cells of the plurality of Femtocell equipments for an SFN offset that matches the offset carried in the Relocation Request message, and determines Femtocell equipment(s) corresponding to the matched SFN offset(s) as candidate target Femtocell(s) according to the mapping relation between the Femtocell SFN_offset and the Femtocell EI, where the Femtocell SFN_offset is an SFN offset between a Femtocell equipment and a neighbor macro cell of the Femtocell equipment.

Further, the Relocation Request message sent from the MSC 501 also carries an ID of a source macro cell where the UE is located. When the AG 502 screens candidate target Femtocells, the AG searches the pre-stored Femtocell SFN_offsets which are SFN offsets between a plurality of Femtocell equipments and neighbor macro cells of the plurality of Femtocell equipments for an SFN offset that matches the offset carried in the Relocation Request message, and determines Femtocell equipment(s), which corresponds to the ID of the source macro cell where the UE is located and the matched SFN offset(s), as candidate target Femtocell(s) according to the mapping relation of the Femtocell EI, the neighbor macro cell ID, and the Femtocell SFN_offset, where the Femtocell SFN_offset is an SFN offset between a Femtocell equipment and a neighbor macro cell of the Femtocell equipment.

Further, the Relocation Request message sent from the MSC 501 also carries an ID of a source macro cell where the UE is located and a cell ID of a Femtocell that acts as a handover target. When the AG 502 screens candidate target Femtocells, the AG searches the pre-stored Femtocell SFN_offsets which are SFN offsets between a plurality of Femtocell equipments and neighbor macro cells of the plurality of Femtocell equipments for an SFN offset that matches the offset carried in the Relocation Request message, and determines Femtocell equipment(s), which corresponds to the source macro cell ID, the matched SFN offset(s), and the cell ID of the Femtocell that acts as a handover target, as candidate target Femtocell(s) according to the mapping relation of the Femtocell EI, the neighbor macro cell ID, the Femtocell_cell_ID, and the Femtocell SFN_offset, where the Femtocell SFN_offset is an SFN offset between a Femtocell equipment and a neighbor macro cell of the Femtocell equipment.

After the AG 502 instructs the screened candidate target Femtocells to activate reserved handover resources, the AG receives parameter information regarding physical channel reconfiguration returned from the screened candidate target Femtocells, and sends the parameter information to the original access network that initiates the handover through the core network. The screened candidate target Femtocells receive a Physical Channel Reconfiguration Complete message that the UE sends after the UE performs physical channel reconfiguration according to the Physical Channel Reconfiguration message sent from the original access network. In addition, after the sole target Femtocell that meets the receiving condition receives the Physical Channel Reconfiguration Complete message, it re-sends a Physical Channel Reconfiguration message to the UE, instructing the UE to re-perform physical channel reconfiguration and establish a connection with the sole target Femtocell.

After the AG 502 receives a Relocation Complete message returned from the target Femtocell that establishes a connection with the UE, it instructs candidate target Femtocells that do not establish a connection with the UE to release the connection with the AG. Or candidate target Femtocells that do not establish a connection with the UE release the connection with the AG after a set time expires.

In conclusion, according to the technical solution provided in the embodiments of the present invention, the AG screens candidate target Femtocells from all the Femtocells on a Femtocell network, so that the scope of target Femtocells are greatly narrowed. In addition, the handover resources reserved by the screened candidate target Femtocells are activated, so that these resources may be used for the connection with the UE; one target Femtocell of the preliminarily screened candidate target Femtocells meets the handover condition of the UE. In this way, the target Femtocell can establish a connection with the UE by using the reserved handover resources, so that the UE can hand over from a macro cell to a Femtocell.

Furthermore, according to the technical solution provided in the embodiments of the present invention, a Release AG Connection message may be sent to target Femtocells that do not establish a connection with the UE, or the target Femtocells that do not establish a connection with the UE release the connection with the Femtocell gateway (AG) automatically if not receiving a Physical Channel Reconfiguration Complete message after a set time expires.

The foregoing detailed are a handover processing method, an AG and a network system provided in the embodiments of the present invention. Although the principle and implementation modes of the invention are described through some exemplary embodiments, the preceding embodiments are merely used to help understand the methods and ideas of the invention. Meanwhile, those of ordinary skill in the art may make various modifications and variations to the embodiments without departing from the scope of the invention.

## Claims

1. A handover processing method, comprising:
by an access gateway, AG, receiving (101) a Relocation Request message sent from a mobile switching center, MSC, wherein the Relocation Request message indicates that a user equipment, UE, hands over to a Femtocell, wherein the Relocation Request message comprises an offset between a system frame number, SFN, of a target Femtocell and an SFN of a source macro cell in which the UE is located;
screening (102) candidate target Femtocells, and instructing the screened candidate target Femtocells to activate reserved handover resources, wherein the candidate target Femtocells comprise the target Femtocell, wherein the screening comprises: searching pre-stored SFN offsets which are between a plurality of Femtocell equipments and neighbor macro cells of the plurality of Femtocell equipments for an SFN offset that matches the offset carried in the Relocation Request message, and determining a Femtocell equipment corresponding to the matched SFN offset as one of the candidate target Femtocells according to a mapping relation between the pre-stored SFN offsets and identities of the plurality of Femtocell equipments, Femtocell EIs; and
after the target Femtocell comprised in the screened candidate target Femtocells establishes a connection with the UE by using the reserved handover resources, receiving (103) a Relocation Complete message returned from the target Femtocell that establishes a connection with the UE;
the Relocation Request message further carries an identity, ID, of a source macro cell in which the UE is located and a cell ID of the target Femtocell, wherein: the process of screening candidate target Femtocells by the AG further comprises:
determining a Femtocell equipment, which corresponds to the source macro cell ID, the matched SFN offset and the cell ID of the target Femtocell as one of the candidate target Femtocells according to a mapping relation of the Femtocell EIs, the neighbor macro cell IDs, Femtocell cell identities, Femtocell_cell_IDs, and the pre-stored SFN offsets;
**characterized in that**
after receiving the Relocation Complete message returned from the target Femtocell that establishes the connection with the UE, the method further comprises: instructing others of the candidate target Femtocells that do not establish a connection with the UE to release a connection with the AG; or, releasing, by others of the candidate target Femtocells that do not establish a connection with the UE, a connection with the AG after a set time expires,
wherein the pre-stored SFN offsets are obtained by one of the following manners:
the pre-stored SFN offsets are reported to the AG from a Femtocell after an SFN of each neighbor macro cell is measured and SFN Offsets between the SFN of the Femtocell and the SFNs of the neighbor macro cells are calculated by the Femtocell, or calculated by the AG after receiving the SFN of each neighbor macro cell and the SFN of the Femtocell from the Femtocell; or
the pre-stored SFN offsets are calculated by the AG when different SFN time start points are configured for each Femtocell covered in a macro cell.

2. The method according to claim 1, wherein the process of receiving a Relocation Complete message returned from the target Femtocell that establishes a connection with the UE after the target Femtocell comprised in the screened candidate target Femtocells establishes a connection with the UE by using the reserved handover resources comprises:
after instructing the screened candidate target Femtocells to activate the reserved handover resources, receiving parameter information regarding physical channel reconfiguration returned from the screened candidate target Femtocells, and sending the parameter information to an original access network that initiates the handover through a core network; and
receiving a Relocation Complete message returned from the target Femtocell that establishes a connection with the UE, wherein the target Femtocell that establishes a connection with the UE is the sole Femtocell that receives a Physical Channel Reconfiguration Complete message, wherein the Physical Channel Reconfiguration Complete message is sent by the UE to the screened candidate target Femtocell after the UE performs the physical channel reconfiguration according to the Physical Channel Reconfiguration message sent from the original access network, wherein the Relocation Complete message is sent by the sole Femtocell, that receives the Physical Channel Reconfiguration Complete message, to the AG after the sole Femtocell establishes the connection with the UE by re-sending a Physical Channel Reconfiguration message to the UE to instruct the UE to re-perform the physical channel reconfiguration.

3. An access gateway, AG, comprising:
a receiving unit (401), configured to receive a Relocation Request message sent from a mobile switching center, MSC, wherein the Relocation Request message indicates that a user equipment, UE, hands over to a Femtocell, wherein, the Relocation Request message received by the receiving unit comprises an offset which is between a system frame number, SFN, of a target Femtocell and an SFN of a source macro cell in which the UE is located;
a storage unit (403), configured to store a mapping relation between SFN offsets and identities of a plurality of Femtocell equipments, Femtocell EIs, wherein the SFN offsets are between the plurality of Femtocell equipments and neighbor macro cells of the plurality of Femtocell equipments;
a processing unit (402), configured to: after the receiving unit receives the Relocation Request message, screen candidate target Femtocells, and instruct the screened candidate target Femtocells to activate reserved handover resources, wherein the candidate target Femtocells comprise the target Femtocell, wherein the processing unit is further configured to search the SFN offsets which are between the plurality of Femtocell equipments and the neighbor macro cells and are stored in the storage unit for an SFN offset that matches the offset carried in the Relocation Request message, and determine a Femtocell equipment corresponding to the matched SFN offset as one of the candidate target Femtocells according to the mapping relation between the SFN offsets and the Femtocell EIs; and
a completing unit (405), configured to: after the target Femtocell comprised in the screened candidate target Femtocells establishes a connection with the UE by using the reserved handover resources, receive a Relocation Complete message returned from the target Femtocell that establishes a connection with the UE;
the Relocation Request message received by the receiving unit further carries an identity, ID, of a source macro cell in which the UE is located and a cell ID of the target Femtocell;
the storage unit (403) is configured to store a mapping relation of the Femtocell EIs, identities of the neighbor macro cells, neighbor macro cell IDs, Femtocell cell identities, Femtocell_cell_IDs, and the SFN offsets; and
the processing unit (402) is configured to: search the SFN offsets for an SFN offset that matches the offset carried in the Relocation Request message, and determine a Femtocell equipment, which corresponds to the source macro cell ID, the matched SFN offset and the cell ID of the target Femtocell as one of the candidate target Femtocells according to the mapping relation of the Femtocell EIs, the neighbor macro cell IDs, the Femtocell_cell_IDs, and the SFN offsets;
**characterized by**
a releasing unit (404), configured to: after the completing unit receives the Relocation Complete message returned from the target Femtocell that establishes the connection with the UE, instruct others of the candidate target Femtocells that do not establish a connection with the UE to release a connection with the AG,
wherein the pre-stored SFN offsets are obtained by one of the following manners:
the pre-stored SFN offsets are reported to the AG from a Femtocell after an SFN of each neighbor macro cell is measured and SFN Offsets between the SFN of the Femtocell and the SFNs of the neighbor macro cells are calculated by the Femtocell, or calculated by the AG after receiving the SFN of each neighbor macro cell and the SFN of the Femtocell from the Femtocell; or
the pre-stored SFN offsets are calculated by the AG when different SFN time start points are configured for each Femtocell covered in a macro cell.

4. A network system, comprising:
the access gateway (502), AG, according to claim 3;
the mobile switching center (501), MSC, configured to send the Relocation Request message to the AG; and
multiple Femtocells (503), acting as the candidate target Femtocells, configured to activate the reserved handover resources according to the instruction from the AG, wherein one of the multiple Femtocells, acting as the target Femtocell, is configured to establish the connection with the UE by using the reserved handover resources, and to send the Relocation Complete message to the AG.

## Patentansprüche

1. Verarbeitungsverfahren einer Verbindungsübergabe, das Folgendes umfasst:
durch einen Zugangsübergang, AG (Access Gateway), Empfangen (101) einer Verlagerungsanforderungsmitteilung die von einer mobilen Vermittlungszentrale, MSC (Mobile Switching Center), gesendet wird, wobei die Verlagerungsanforderungsmitteilung angibt, dass ein Benutzer-Equipment, UE (User Equipment), zu einer Femtozelle übergibt, wobei die Verlagerungsanforderungsmitteilung einen Versatz zwischen einer Systemrahmennummer, SFN (System Frame Number), einer Ziel-Femtozelle und einer SFN einer Quell-Makrozelle umfasst, in welcher sich das UE aufhält;
Auswahlprüfen (102) von Kandidaten-Ziel-Femtozellen, und Anweisen der geprüften Kandidaten-Ziel-Femtozellen, reservierte Verbindungsübergaberessourcen zu aktivieren, wobei die Kandidaten-Ziel-Femtozellen die Ziel-Femtozelle umfassen, wobei das Auswahlprüfen Folgendes umfasst: Suchen nach zuvor gespeicherten SFN-Versätzen, welche zwischen einer Vielzahl von Femtozellen-Equipments und Nachbar-Makrozellen der Vielzahl von Femtozellen-Equipments für einen SFN-Versatz liegen, der zu dem Versatz passt, der in der Verlagerungsanforderungsmitteilung befördert wird, und Bestimmen eines Femtozellen-Equipments entsprechend dem passenden SFN-Versatz als einen der Kandidaten-Ziel-Femtozellen gemäß einer Abbildungsbeziehung zwischen den zuvor gespeicherten SFN-Versätzen und Identitäten der Vielzahl von Femtozellen-Equipments, "Femto cell EIs"; und
nachdem die Ziel-Femtozelle, die in den geprüften Kandidaten-Ziel-Femtozellen enthalten ist, eine Verbindung mit dem UE unter Verwendung der reservierten Verbindungsübergaberessourcen herstellt, Empfangen (103) einer Verlagerung-abgeschlossen-Mitteilung die von der Ziel-Femtozelle zurückgesendet wird, welche die Verbindung mit dem UE herstellt;
die Verlagerungsanforderungsmitteilung des Weiteren eine Identität, ID, einer Quell-Makrozelle, in welcher sich das UE aufhält, und eine Zellen-ID der Ziel-Femtozelle befördert, wobei: der Prozess der Auswahlprüfung von Kandidaten-Ziel-Femtozellen durch den AG des Weiteren Folgendes umfasst:
Bestimmen eines Femtozellen-Equipments, welches der Quell-Makrozellen-ID, dem passenden SFN-Versatz und der Zellen-ID der Ziel-Femtozelle als eine der Kandidaten-Ziel-Femtozellen gemäß der Abbildungsbeziehung der "Femtocell EIs", der Nachbar-Makrozellen-IDs, Femtozellen-Zellenidentitäten, "Femtocell_cell_IDS", und den zuvor gespeicherten SFN-Versätzen entspricht;
**dadurch gekennzeichnet, dass**
nach dem Empfangen der Verlagerung-abgeschlossen-Mitteilung, die von der Ziel-Femtozelle zurückgesendet wird, welche die Verbindung mit dem UE herstellt, das Verfahren des Weiteren Folgendes umfasst: Anweisen anderer der Kandidaten-Ziel-Femtozellen, die keine Verbindung mit dem UE herstellen, eine Verbindung mit dem AG freizugeben; oder Freigeben, durch andere der Kandidaten-Ziel-Femtozellen, die keine Verbindung mit dem UE herstellen, einer Verbindung mit dem AG, nachdem eine eingestellte Zeit abläuft,
wobei die zuvor gespeicherten SFN-Versätze auf eine der nachfolgenden Arten erhalten werden:
die zuvor gespeicherten SFN-Versätze werden dem AG von einer Femtozelle gemeldet, nachdem eine SFN von jeder Nachbar-Makrozelle gemessen wird, und SFN-Versätze zwischen der SFN der Femtozelle und den SFNs der Nachbar-Makrozellen durch die Femtozelle berechnet werden, oder durch den AG nach dem Empfangen der SFN von jeder Nachbar-Makrozelle und der SFN der Femtozelle von der Femtozelle berechnet werden; oder
die zuvor gespeicherten SFN-Versätze durch den AG berechnet werden, wenn unterschiedliche SFN-Zeitstartpunkte für jede Femtozelle konfiguriert sind, die in einer Makrozelle versorgt wird.

2. Verfahren nach Anspruch 1, wobei der Prozess des Empfangens einer Verlagerung-abgeschlossen-Mitteilung, die von der Ziel-Femtozelle zurückgesendet wird, die eine Verbindung mit dem UE herstellt, nachdem die Ziel-Femtozelle, die in den geprüften Kandidaten-Ziel-Femtozellen enthalten ist, eine Verbindung mit dem UE unter Verwendung der reservierten Verbindungsübergaberessourcen herstellt, Folgendes umfasst:
nach dem Anweisen der geprüften Kandidaten-Ziel-Femtozellen, die reservierten Verbindungsübergaberessourcen zu aktivieren, Empfangen von Parameterinformationen hinsichtlich physikalischer Kanalumkonfigurierung, die von den geprüften Kandidaten-Ziel-Femtozellen zurückgesendet werden, und Senden der Parameterinformationen an ein ursprüngliches Zugangsnetzwerk, welches die Verbindungsübergabe durch ein Kernnetzwerk initiiert; und
Empfangen einer Verlagerung-abgeschlossen-Mitteilung, die von der Ziel-Femtozelle zurückgesendet wird, welche eine Verbindung mit dem UE herstellt, wobei es sich bei der Ziel-Femtozelle, welche eine Verbindung mit dem UE herstellt, um die einzige Femtozelle handelt, welche eine physikalische-Kanalumkonfigurierung-abgeschlossen-Mitteilung empfängt, wobei die physikalische-Kanalumkonfigurierung-abgeschlossen-Mitteilung durch das UE an die geprüfte Kandidaten-Ziel-Femtozelle gesendet wird, nachdem das UE die physikalische Kanalumkonfigurierung gemäß der physikalischen-Kanalumkonfigurierung-Mitteilung durchführt, die von dem ursprünglichen Zugangsnetzwerk gesendet wird, wobei die Verlagerung-abgeschlossen-Mitteilung durch die einzige Femtozelle, welche die physikalische-Kanalumkonfigurierung-abgeschlossen-Mitteilung empfängt, an den AG gesendet wird, nachdem die einzige Femtozelle die Verbindung mit dem UE durch erneutes Senden einer physikalischen-Kanalumkonfigurierung-Mitteilung an das UE herstellt, um das UE anzuweisen, die physikalische Kanalumkonfigurierung erneut durchzuführen.

3. Zugangsübergang, AG, der Folgendes umfasst:
eine Empfangseinheit (401), die dazu ausgestaltet ist, eine Verlagerungsanforderungsmitteilung zu empfangen, die von einer mobilen Vermittlungszentrale, MSC, gesendet wird, wobei die Verlagerungsanforderungsmitteilung angibt, dass ein Benutzer-Equipment, UE, zu einer Femtozelle übergibt, wobei die Verlagerungsanforderungsmitteilung, die durch die Empfangseinheit empfangen wird, einen Versatz umfasst, der zwischen einer Systemrahmennummer, SFN, einer Ziel-Femtozelle und einer SFN einer Quell-Makrozelle liegt, in welcher sich das UE aufhält;
eine Speichereinheit (403), die dazu ausgestaltet ist, eine Abbildungsbeziehung zwischen SFN-Versätzen und Identitäten einer Vielzahl von Femtozellen-Equipments, "Femtocell EIs", zu speichern, wobei die SFN-Versätze zwischen der Vielzahl von Femtozellen-Equipments und Nachbar-Makrozellen der Vielzahl von Femtozellen-Equipments liegen;
eine Verarbeitungseinheit (402), die dazu ausgestaltet ist: nachdem die Empfangseinheit die Verlagerungsanforderungsmitteilung empfängt, Kandidaten-Ziel-Femtozellen zu prüfen und die geprüften Kandidaten-Ziel-Femtozellen anzuweisen, reservierte Verbindungsübergaberessourcen zu aktivieren, wobei die Kandidaten-Ziel-Femtozellen die Ziel-Femtozelle umfassen, wobei die Verarbeitungseinheit des Weiteren dazu ausgestaltet ist, die SFN-Versätze zu suchen, welche zwischen der Vielzahl von Femtozellen-Equipments und den Nachbar-Makrozellen liegen und in der Speichereinheit für einen SFN-Versatz gespeichert sind, der zu dem Versatz passt, der in der Verlagerungsanforderungsmitteilung befördert wird, und ein Femtozellen-Equipment entsprechend dem passenden SFN-Versatz als eine der Kandidaten-Ziel-Femtozellen gemäß der Abbildungsbeziehung zwischen den SFN-Versätzen und den "Femtocell EIs" zu bestimmen; und
eine Abschlusseinheit (405), die dazu ausgestaltet ist: nachdem die Ziel-Femtozelle, die in den geprüften Kandidaten-Ziel-Femtozellen enthalten ist, eine Verbindung mit dem UE unter Verwendung der reservierten Verbindungsübergaberessourcen herstellt, eine Verlagerung-abgeschlossen-Mitteilung zu empfangen, die von der Ziel-Femtozelle zurückgesendet wird, welche eine Verbindung mit dem UE herstellt;
die Verlagerungsanforderungsmitteilung, die durch die Empfangseinheit empfangen wird, des Weiteren eine Identität, ID, einer Quell-Makrozelle, in welcher sich das UE aufhält, und eine Zellen-ID der Ziel-Femtozelle befördert;
die Speichereinheit (403) dazu ausgestaltet ist, eine Abbildungsbeziehung der "Femtocell EIs", Identitäten der Nachbar-Makrozellen, Nachbar-Makrozellen-IDs, Femtozellenidentitäten, "Femtocell_cell_IDs", und die SFN-Versätze zu speichern; und
die Verarbeitungseinheit (402) dazu ausgestaltet ist: nach den SFN-Versätzen für einen SFN-Versatz zu suchen, welcher zu dem Versatz passt, der in der Verlagerungsanforderungsmitteilung befördert wird, und ein Femtozellen-Equipment zu bestimmen, welches der Quell-Makrozellen-ID, dem passenden SFN-Versatz und der Zellen-ID der Ziel-Femtozelle als eine der Kandidaten-Ziel-Femtozellen gemäß der Abbildungsbeziehung der "Femtocell EIs", der Nachbar-Makrozellen-IDs, der "Femtocell_cell_IDS", und den SFN-Versätzen entspricht;
**gekennzeichnet durch**
eine Freigabeeinheit (404), die dazu ausgestaltet ist: nachdem die Abschlusseinheit die Verlagerung-abgeschlossen-Mitteilung empfängt, die von der Ziel-Femtozelle zurückgesendet wird, welche die Verbindung mit dem UE herstellt, andere der Kandidaten-Ziel-Femtozellen, welche keine Verbindung mit dem UE herstellen, anzuweisen, eine Verbindung mit dem AG freizugeben,
wobei die zuvor gespeicherten SFN-Versätze auf eine der nachfolgenden Arten erhalten werden:
die zuvor gespeicherten SFN-Versätze werden dem AG von einer Femtozelle gemeldet, nachdem eine SFN von jeder Nachbar-Makrozelle gemessen wird, und SFN-Versätze zwischen der SFN der Femtozelle und den SFNs der Nachbar-Makrozellen durch die Femtozelle berechnet werden, oder durch den AG nach dem Empfangen der SFN von jeder Nachbar-Makrozelle und der SFN der Femtozelle von der Femtozelle berechnet werden; oder
die zuvor gespeicherten SFN-Versätze durch den AG berechnet werden, wenn unterschiedliche SFN-Zeitstartpunkte für jede Femtozelle konfiguriert sind, die in einer Makrozelle versorgt wird.

4. Netzwerksystem, das Folgendes umfasst:
den Zugangsübergang (502), AG, gemäß Anspruch 3;
die mobile Vermittlungszentrale (501), MSC, die dazu ausgestaltet ist, die Verlagerungsanforderungsmitteilung an den AG zu senden; und
zahlreiche Femtozellen (503), die als die Kandidaten-Ziel-Femtozellen agieren, die dazu ausgestaltet sind, die reservierten Verbindungsübergaberessourcen gemäß der Anweisung von dem AG zu aktivieren, wobei eine der zahlreichen Femtozellen, die als die Ziel-Femtozelle agiert, dazu ausgestaltet ist, die Verbindung mit dem UE unter Verwendung der reservierten Verbindungsübergaberessourcen herzustellen, und die Verlagerung-abgeschlossen-Mitteilung an den AG zu senden.

## Revendications

1. Procédé de traitement de transfert intercellulaire, comprenant les étapes suivantes :
par une passerelle d'accès, AG, recevoir (101) un message de requête de transfert envoyé à partir d'un centre de commutation mobile, MSC, dans lequel le message de requête de transfert indique qu'un équipement utilisateur, UE, est transféré vers une femto cellule, le message de requête de transfert comportant un décalage entre un numéro de trame système, SFN, d'une femto cellule cible et un SFN d'une macro cellule source dans laquelle l'UE est situé ;
sélectionner (102) des femto cellules cible candidates, et ordonner aux femto cellules cible candidates sélectionnées d'activer des ressources de transfert intercellulaire réservées, les femto cellules cible candidates comprenant la femto cellule cible, l'étape de sélection comprenant : rechercher dans des décalages SFN préstockés qui existent entre une pluralité d'équipements de femto cellule et des macro cellules voisines de la pluralité d'équipements de femto cellule un décalage SFN qui correspond au décalage contenu dans le message de requête de transfert, et déterminer un équipement de femto cellule correspondant au décalage SFN apparié comme une des femto cellules cible candidates selon une relation de mappage entre les décalages SFN préstockés et les identités de la pluralité d'équipements de femto cellule, Femtocell EI ; et
après que la femto cellule cible comprise dans les femto cellules cible candidates sélectionnées a établi une connexion avec l'UE en utilisant les ressources de transfert intercellulaire réservées, recevoir (103) un message Transfert terminé retourné à partir de la femto cellule cible qui établit une connexion avec l'UE ;
le message de requête de transfert contient en outre une identité, ID, d'une macro cellule source dans laquelle l'UE est situé et un ID de cellule de la femto cellule cible : le processus consistant à sélectionner des femto cellules cible candidates par l'AG comprenant en outre :
déterminer un équipement de femto cellule, qui correspond à l'ID de macro cellule source, au décalage SFN apparié et à l'ID de cellule de la femto cellule cible comme une des femto cellules cible candidates selon une relation de mappage des Femtocell EI, des ID de macro cellules voisines, des identités de cellule de femto cellules, Femtocell_cell_IDs, et des décalages SFN préstockés ;
**caractérisé en ce que**
après avoir reçu le message Transfert terminé retourné à partir de la femto cellule cible qui établit la connexion avec l'UE, le procédé comprend en outre : ordonner aux autres femto cellules cible candidates qui n'établissement pas une connexion avec l'UE de libérer une connexion avec l'AG ; ou, libérer, par les autres femto cellules cible candidates qui n'établissent pas une connexion avec l'UE, une connexion avec l'AG après qu'un temps défini a expiré,
les décalages SFN préstockés étant obtenus par une des manières suivantes :
les décalages SFN préstockés sont transmis à l'AG à partir d'une femto cellule après qu'un SFN de chaque macro cellule voisine a été mesuré et que des décalages SFN entre le SFN de la femto cellule et les SFN des macro cellules voisines ont été calculés par la femto cellule, ou calculés par l'AG après avoir reçu le SFN de chaque macro cellule voisine et le SFN de la femto cellule à partir de la femto cellule ; ou
les décalages SFN préstockés sont calculés par l'AG lorsque différents points de démarrage temporels SFN sont configurés pour chaque femto cellule couverte dans une macro cellule.

2. Procédé selon la revendication 1, dans lequel le processus consistant à recevoir un message Transfert terminé retourné à partir de la femto cellule cible qui établit une connexion avec l'UE après que la femto cellule cible comprise dans les femto cellules cible candidates sélectionnées a établi une connexion avec l'UE en utilisant les ressources de transfert intercellulaire réservées comprend :
après avoir ordonné aux femto cellules cible candidates sélectionnées d'activer les ressources de transfert intercellulaire réservées, recevoir des informations de paramètre concernant une reconfiguration de canal physique retournées à partir des femto cellules cible candidates sélectionnées, et envoyer les informations de paramètre à un réseau d'accès original qui initie le transfert intercellulaire par l'intermédiaire d'un réseau d'infrastructure ; et
recevoir un message Transfert terminé retourné à partir de la femto cellule cible qui établit une connexion avec l'UE, la femto cellule cible qui établit une connexion avec l'UE étant la seule femto cellule qui reçoit un message Reconfiguration de canal physique terminée, le message Reconfiguration de canal physique terminée étant envoyé par l'UE à la femto cellule cible candidate sélectionnée après que l'UE a exécuté la reconfiguration de canal physique selon le message Reconfiguration de canal physique envoyé à partir du réseau d'accès original, le message Transfert terminé étant envoyé par la seule femto cellule, qui reçoit le message Reconfiguration de canal physique terminée, à l'AG après que la seule femto cellule a établi la connexion avec l'UE en renvoyant un message Reconfiguration de canal physique à l'UE pour ordonner à l'UE d'exécuter à nouveau la reconfiguration de canal physique.

3. Passerelle d'accès, AG, comprenant :
une unité de réception (401), configurée pour recevoir un message de requête de transfert envoyé à partir d'un centre de commutation mobile, MSC, le message de requête de transfert indiquant qu'un équipement utilisateur, UE, est transféré vers une femto cellule, le message de requête de transfert reçu par l'unité de réception comportant un décalage qui existe entre un numéro de trame système, SFN, d'une femto cellule cible et un SFN d'une macro cellule source dans laquelle l'UE est situé ;
une unité de stockage (403), configurée pour stocker une relation de mappage entre des décalages SFN et des identités d'une pluralité d'équipements de femto cellule, Femtocell EI, les décalages SFN étant entre la pluralité d'équipements de femto cellule et des macro cellules voisines de la pluralité d'équipements de femto cellule ;
une unité de traitement (402), configurée pour: après que l'unité de réception a reçu le message de requête de transfert, sélectionner des femto cellules cible candidates, et ordonner aux femto cellules cible candidates sélectionnées d'activer des ressources de transfert intercellulaire réservées, les femto cellules cible candidates comprenant la femto cellule cible, l'unité de traitement étant en outre configurée pour rechercher dans les décalages SFN qui existent entre la pluralité d'équipements de femto cellule et les macro cellules voisines et qui sont stockés dans l'unité de stockage un décalage SFN qui correspond au décalage contenu dans le message de requête de transfert, et déterminer un équipement de femto cellule correspondant au décalage SFN apparié comme une des femto cellules cible candidates selon la relation de mappage entre les décalages SFN et les Femtocell EI ; et
une unité d'accomplissement (405), configurée pour: après que la femto cellule cible comprise dans les femto cellules cible candidates sélectionnées a établi une connexion avec l'UE en utilisant les ressources de transfert intercellulaire réservées, recevoir un message Transfert terminé retourné à partir de la femto cellule cible qui établit une connexion avec l'UE ;
le message de requête de transfert reçu par l'unité de réception contient en outre une identité, ID, d'une macro cellule source dans laquelle l'UE est situé et un ID de cellule de la femto cellule cible ;
l'unité de stockage (403) est configurée pour stocker une relation de mappage des Femtocell EI, des identités des macro cellules voisines, neighbor_macro_cell_IDs, des identités de cellule de femto cellules, Femtocell_cell_IDs, et des décalages SFN ; et
l'unité de traitement (402) est configurée pour: rechercher dans les décalages SFN un décalage SFN qui correspond au décalage contenu dans le message de requête de transfert, et déterminer un équipement de femto cellule, qui correspond à l'ID de macro cellule source, au décalage SFN apparié et à l'ID de cellule de la femto cellule cible comme une des femto cellules cible candidates selon la relation de mappage des Femtocell EI, des ID de macro cellules voisines, des identités de cellule de femto cellules, Femtocell_cell_IDs, et des décalages SFN ;
**caractérisée par**
une unité de libération (404), configurée pour: après que l'unité d'accomplissement a reçu le message Transfert terminé retourné à partir de la femto cellule cible qui établit la connexion avec l'UE, ordonner aux autres femto cellules cible candidates qui n'établissement pas une connexion avec l'UE de libérer une connexion avec l'AG,
les décalages SFN préstockés étant obtenus par une des manières suivantes :
les décalages SFN préstockés sont transmis à l'AG à partir d'une femto cellule après qu'un SFN de chaque macro cellule voisine a été mesuré et que des décalages SFN entre le SFN de la femto cellule et les SFN des macro cellules voisines ont été calculés par la femto cellule, ou calculés par l'AG après avoir reçu le SFN de chaque macro cellule voisine et le SFN de la femto cellule à partir de la femto cellule ; ou
les décalages SFN préstockés sont calculés par l'AG lorsque différents points de démarrage temporels SFN sont configurés pour chaque femto cellule couverte dans une macro cellule.

4. Système de réseau, comprenant :
la passerelle d'accès (502), AG, selon la revendication 3 ;
le centre de commutation mobile (501), MSC, configuré pour envoyer le message de requête de transfert à l'AG ; et
plusieurs femto cellules (503), agissant comme les femto cellules cible candidates, configurées pour activer les ressources de transfert intercellulaire réservées selon l'instruction provenant de l'AG, une des multiples femto cellules, agissant comme la femto cellule cible, étant configurée pour établir la connexion avec l'UE en utilisant les ressources de transfert intercellulaire réservées, et pour envoyer le message Transfert terminé à l'AG.
